(19) **Europäisches Patentamt**

**European Patent Office**

**Office européen des brevets**

(11) **EP 1 545 741 B1**

(12) **EUROPEAN PATENT SPECIFICATION**

(45) Date of publication and mention
of the grant of the patent:
**22.03.2006 Bulletin 2006/12**

(51) Int Cl.:
**B01D 39/16** (2006.01)

(21) Application number: **03754578.7**

(86) International application number:
**PCT/US2003/028911**

(22) Date of filing: **15.09.2003**

(87) International publication number:
**WO 2004/028662 (08.04.2004 Gazette 2004/15)**

(54) **HIGH EFFICIENCY ASHRAE FILTER MEDIA**

FILTERMEDIUM FÜR GASE

SUPPORT FILTRANT ASHRAE A EFFICACITE ELEVEE

(84) Designated Contracting States:
**AT BE BG CH CY CZ DE DK EE ES FI FR GB GR HU IE IT LI LU MC NL PT RO SE SI SK TR**

(30) Priority: **26.09.2002 US 255366**

(43) Date of publication of application:
**29.06.2005 Bulletin 2005/26**

(73) Proprietor: **HOLLINGSWORTH & VOSE COMPANY East Walpole, MA 02032 (US)**

(72) Inventor: **HEALEY, David Thomas Christiansburg, VA 24073 (US)**

(74) Representative: **Casey, Lindsay Joseph
F. R. Kelly & Co.
27 Clyde Road
Ballsbridge
Dublin 4 (IE)**

(56) References cited:
**WO-A-01/32292**      **WO-A-02/089956**
**US-A- 5 306 534**      **US-A1- 2001 045 086**

**Description**

FIELD OF THE INVENTION

The present invention relates to a filter media for use in the ASHRAE market, and more particularly to a high efficiency filter media having improved alpha values.

BACKGROUND OF THE INVENTION

Paper filter media are commonly used for air filter applications such as heating, refrigeration, and air conditioning systems. Suitable filters and filter media for such applications are approved by the American Society of Heating, Refrigerating and Air-Conditioning Engineers, Inc. (ASHRAE), and most are referred to as ASHRAE filters or filter media.
In general, paper filter media comprise dense webs or mats of fibers that are used to form a filter, which is oriented in a gas stream carrying particulate material. The densely packed fine fibers of these webs provide fine interfiber pore structures that are highly suitable for mechanically trapping or screening of fine particles. The filter media are generally constructed to be permeable to the gas flow, and to also have a sufficiently fine pore size and appropriate porosity to inhibit the passage therethrough of particles greater than a selected size. As the gases pass through the filter media, the dust entering side of the filter media operates through diffusion and interception to capture and retain selected sized particles from the gas stream.
Originally, ASHRAE filters were formed from glass fibers or glass microfibers (referred to hereinafter as "glass fibers"). These glass fibers, however, are suspected of being cancer causing agents and thus their use in air filters is undesirable. Attempts to replace glass fiber-based air filtration media with meltblown electret fibers have met limited success. The meltblown fiber webs typically need to be electrostatically charged to provide high particulate matter removal efficiencies. The stability of the electrostatic charge during the life of the filter, however, has been shown to decrease over time. Once the charge dissipates, filtration performance can fall below acceptable levels.
Other problems resulting from the use of synthetic filter media as an alternative to glass fiber mats is that they tend to become plugged with the trapped dirt. Reduction of the porosity of the media can improve filtration performance of the media, but the effect is to increase the air pressure drop across the media. Additionally, reduced porosity of the filter media enables dirt particles to accumulate on the media surface at a faster rate than for a more porous filter, thereby causing a more rapid rate of increase in the pressure drop across the media. This phenomenon shortens the service life of the filter.
Some non-glass-based filter media alos lack the physical integrity sufficient to enable them to be self-supporting. Although the physical integrity of the filter media can be improved by increasing the basis weight or thickness thereof, the increased basis weight or thickness exacerbates the pressure drop across the filter media. As such, non-glass based filter media are typically laminated to a supporting layer or fitted in a rigid frame. However, the conventional supporting layer or rigid frame generally does not contribute to the filtration process and only increases the production cost of the filter media.
Thus, there is a need for a synthetic filter media having filtration efficiencies similar too or better than standard glass mat ASHRAE filters.
The document WO-A-0132292 describes a filter comprising two outer spun-bound layers and two inner meltblown layers having a lower fiber diameter.

SUMMARY OF THE INVENTION

The present invention provides a high efficiency filter media that is particularly useful for ASHRAE filtering applications, such as for use in heating, refrigeration, and air conditioning applications.
In one embodiment the filter media is formed from a multicomponent sheet having a coarse meltblown upstream outer layer, a spunbond downstream outer layer, and a filtering component disposed between the upstream outer layer and the downstream outer layer. The filtering component is formed from at least one meltblown layer, and more preferably is formed from a first, upstream meltblown layer and a second, downstream meltblown layer. The first and second meltblown layers are each preferably formed from fibers having a diameter in the range of about 0.5 to 1.5 micrometers, and the fibers forming the first meltblown layer preferably have a diameter greater than a diameter of the fibers forming the second meltblown layer. In an exemplary embodiment, the second meltblown layer is formed from fibers having a diameter of about 0.65 micrometers, and the first meltblown layer is formed from fibers having a diameter of about 1 micrometer.
In one embodiment, the upstream outer layer is formed from a stiff, coarse meltblown polymeric material, and more preferably is formed from a non-woven polymer fiber web having randomly oriented fibers. The upstream outer layer preferably has a web basis weight of about 2 g/m$^2$, and the fibers forming the upstream outer layer preferably have a diameter in the range of about 5 to 10 micrometers.

In another embodiment, the spunbond downstream outer layer can have a web basis weight in the range of about 10 to 40 g/m$^2$, and the fibers forming the downstream outer layer can have a diameter in the range of 10 to 25 micrometers. The downstream outer layer can optionally include a meltblown layer adhered to the spunbond layer on a dust entering side of the spunbond downstream outer layer.

In an exemplary embodiment, the filter media has an alpha value of at least about 10, and more preferably about 16, and has a dust holding capacity of at least about 50 g/m$^2$. Preferably, the filtering component, the upstream outer layer, and the downstream outer layer are formed from polypropylene.

BRIEF DESCRIPTION OF THE DRAWINGS

The invention will be more fully understood from the following detailed description taken in conjunction with the accompanying drawings, in which like reference numerals designate like parts throughout the various figures, and wherein:

Figure 1 is a diagram illustrating a cross-sectional view of a filter media according to the present invention;

Figure 2 is a diagram illustrating another embodiment of the filter media of FIG. 1.

Figure 3 is a diagram illustrating one embodiment of the filter media of FIG. 1; and

DETAILED DESCRIPTION OF THE INVENTION

The features and other details of the invention will now be more particularly described and pointed out in the claims. It will be understood that the particular embodiments of the invention are shown by way of illustration and not as limitations of the invention. The principal features of this invention can be employed in various embodiments without departing from the scope of the invention.

In general, the present invention provides filter media which retain particles, air borne contaminants, and/or oil. The filter media is particularly useful for ASHRAE filtering applications, including filters for use in heating and air conditioning ducts as bag filters or pleated panel filters. The filter media is also cost effective, has enhanced filtration performance characteristics and increased stiffness, and has improved handling and processability over current filter media.

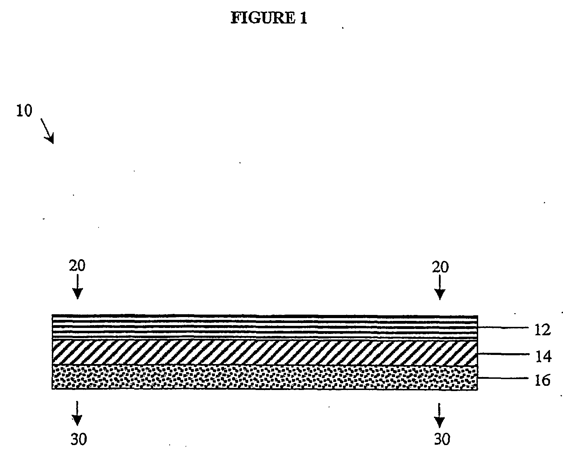

Figure 1 illustrates one embodiment of a filter media 10 having a first outer layer 12 formed on a dust entering side 20, e.g., the upstream side, of the filter media 10, a middle filtering layer 14, and a second outer layer 16, or backing, formed on a dust exiting side 30, e.g., the downstream side, of the filter media 10. The first outer layer is preferably formed from a meltblown polymer fiber web, and it is effective to increase the dust holding capacity of and provide stiffness to the filter media 10. The second outer supporting layer 16 is preferably formed from a spunbond polymer fiber web, or a 2-ply combination layer having a meltblown polymer fiber web adhered to a spunbond polymer fiber web. The second outer layer is effective to add strength to the filter media 10, which can prevent rupture of the filter 10 during processing. The middle filtering component 14 serves as the primary filtering component of the filter media 10, and can be formed from one, two, or more layers of fiber web.

The first outer layer 12 of the filter media 10 can be formed from a stiff, coarse meltblown fiber web, and is thereby effective to provide stiffness to the filter media 10 for a given pressure drop, and to increase the dust loading capacity of the filter media 10. In an exemplary embodiment, the first outer layer 12 is textured to facilitate adherence of the outer layer 12 to adjacent layers, namely the middle filtering layer 14. Meltblown fibers used to form the first outer layer 12 are known in the art, and generally include non-woven fibers formed from randomly oriented fibers made by entangling the fibers through mechanical means. The meltblown fiber web can have a relatively broad distribution of fiber diameters. The average fiber diameter of the polymer used to form the fiber web generally can be in the range of about 1 to 20 micrometers. Depending on the intended application, a more preferred polymer fiber diameter is in the range of about 1 to 15 micrometers, and more preferably about 5 to 7 micrometers. The basis weight of the first outer layer 12 is preferably in the range of about 10 to 150 g/m$^2$, and more preferably is about 100 g/m$^2$. In use, the first outer layer 12 preferably has an air permeability greater than (17 m$^3$/min (600 cubic feet per minute) in 1.7 cm (0.5 inches) of water.

A person having ordinary skill in the art will appreciate that all fiber diameters disclosed herein are representative of an average fiber diameter using SEM analysis.

Suitable materials which can be used to form the first meltblown outer layer 12 include polyolefins such as polyethylene, polypropylene, polyisobutylene, and ethylene-alpha-olefin copolymers; acrylic polymers and copolymers such as polyacrylate, polymethylmethacrylate, polyethylacrylate; vinyl halide polymers and copolymers such as polyvinyl chloride; polyvinyl ethers such as polyvinyl methyl ether; polyvinylidene halides, such as polyvinylidene fluoride and polyvinylidene chloride; polyacrylonitrile; polyvinyl ketones; polyvinyl amines; polyvinyl aromatics such as polystyrene; polyvinyl esters, such as polyvinyl acetate; copolymers of vinyl monomers with each other and olefins, such as ethylene-methyl methacrylate copolymers, acrylonitrile-styrene copolymers, ABS resins, and ethylene-vinyl acetate copolymers; natural and synthetic rubbers, including butadiene-styrene copolymers, polyisoprene, synthetic polyisoprene, polybutadiene, butadiene-acrylonitrile copolymers, polychloroprene rubbers, polyisobutylene rubber, ethylene-propylene rubber, ethylene-propylene-diene rubbers, isobutylene-isoprene copolymers, and polyurethane rubbers; polyamides such as Nylon 66 and polycaprolactam; polyesters, such as polyethylene terephthalate; polycarbonates; polyimides; polyethers; fluoropolymers such as polytetrafluoroethylene and fluorinated ethylenepropylene. Polypropylene is among the more preferred polymeric materials.

The second outer layer 16 is preferably formed from a spunbond fiber web disposed on the dust exiting side 30 of the filter media 10. The use of a spunbond fiber web provides added strength and stiffness to the filter media 10. The second outer layer 16 can optionally be formed from a 2-ply combination layer having a meltblown fiber web adhered to a spunbond fiber web. The 2-ply combination layer can be formed by meltblowing a very coarse fiber directly onto a spunbond fiber web. The meltblown fibers are preferably formed from a stiff polymeric material, similar to the materials described with respect to the first outer layer 12, and are effective to provide stiffness to the filter material 10. The meltblown fiber web layer is further advantageous in that it adds uniformity to the spunbond layer to eliminate any areas where light fiber coverage may exist. The spunbond fibers can be formed from a light polymeric material, and are also effective to provide strength to the filter material 10.

Spunbond webs are typically characterized by a relatively high strength/weight ratio and high porosity, and have good abrasion resistance properties. The average fiber diameter can be in the range of about 10 to 25 micrometers. The basis weight of the second outer layer 16 is preferably in the range of about 10 to 40 g/m$^2$, and more preferably is about 34 g/m$^2$. However, the basis weight of the second outer layer 16 can vary depending upon the strength requirements of a given filtering application, and considerably heavier spunbond layers can be used. One of ordinary skill in the art can readily determine the suitable basis weight, considering factors such as the desired level of strength during manufacture or use, intended filter efficiency and permissible levels of resistance or pressure drop. In general, the spunbond layer is a relatively thin layer of coarse fibers that primarily serves a structural function, and is to contribute little or nothing to either filtration or pressure drop in the completed filter media.

Suitable spunbond materials from which the outer layer 16 can be made are well known to those of ordinary skill in the art. For example, the spunbond fibers can be prepared from various polymer resins, including but not limited to, polyolefins such as polyethylene, polypropylene, polyisobutylene, and ethylene-alpha-olefin copolymers; acrylic polymers and copolymers such as polyacrylate, polymethylmethacrylate, polyethylacrylate; vinyl halide polymers and copolymers such as polyvinyl chloride; polyvinyl ethers such as polyvinyl methyl ether; polyvinylidene halides, such as polyvinylidene fluoride and polyvinylidene chloride; polyacrylonitrile; polyvinyl ketones; polyvinyl amines; polyvinyl aromatics such as polystyrene; polyvinyl esters, such as polyvinyl acetate; copolymers of vinyl monomers with each other and olefins, such as ethylene-methyl methacrylate copolymers, acrylonitrile-styrene copolymers, ABS resins, and ethylene-vinyl acetate copolymers; natural and synthetic rubbers, including butadiene-styrene copolymers, polyisoprene, synthetic polyisoprene, polybutadiene, butadiene-acrylonitrile copolymers, polychloroprene rubbers, polyisobutylene rubber, ethylene-propylene rubber, ethylene-propylene-diene rubbers, isobutylene-isoprene copolymers, and polyurethane rubbers; polyamides such as Nylon 66 and polycaprolactam; polyesters, such as polyethylene terephthalate; polycarbonates; polyimides; polyethers; fluoropolymers such as polytetrafluoroethylene and fluorinated ethylenepropylene.

An example of a suitable commercially available spunbond material for use in the outer layer 16 is the polypropylene spunbond material provided by Reemay, Inc., which is a member of BBA Nonwovens, having a basis weight of about 34 g/m$^2$ (1ounces/y$^2$).

The filtering component 14, which is disposed between the first and second outer layers 12, 16, is effective to provide filtration and can be formed from one, two, or more layers of fiber web. The layers 14 can range from coarse, high loft fibers, to fine microfibers, and can have a web basis weight ranging from about 1 to 50 g/m$^2$, and more preferably from 1 to 20 g/m$^2$. The properties of each layer are dependent on manufacturing practice and polymer type. Thus, the processing parameters can be adjusted to produce one or more meltblown layers having the desired properties.

The number of layers, and the type of material, used to form the filtering component 14 can be determined based on the efficiency level required for use. Filters having a high efficiency level will prevent more particles from passing through the filter compared to filters having lower efficiency levels. In general, filters used in the ASHRAE market typically have an efficiency level of either 40-45%, 60-65%, 80-85%, or 90-95%. A person having ordinary skill in the art will readily appreciate that a variety of different layers known,in the art can be used to achieve the desired efficiency.

The meltblown material used to form the filtering component 14 of the filter media 10, 40, 50 according to the present invention can be made from a variety of polymeric materials, including those described with respect to the first outer layer 12. The fibers preferably have a relatively broad fiber diameter distribution, the average fiber diameter of the polymer used being in the range of about 0.5 to 20 micrometers. Depending on the intended application, a more preferred average polymer fiber diameter is in the range of about 0.5 to 1.5 micrometers. The total thickness of the filtering component 14 can be between about 0.05 and 0.254 cm (20 and 100 mils),and is preferably between about 0.127 and 0.2 cm (50 and 80 mils.)

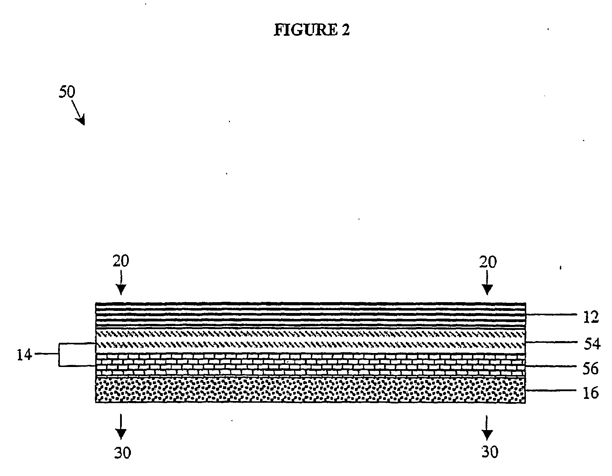

Figure 2 illustrates an exemplary embodiment of a filter media 50 useful for ASHRAE filtering applications. The filter media 50 includes first and second outer layers 12, 16 as previously described, and a filtering component 14 formed from two meltblown layers 54, 56. The first and second meltblown filtering components 54, 56 are each formed from fibers having a diameter in the range of about 0.5 to 1.5 micrometers, and are effective to trap and retain particles from the air stream being filtered. The first, upstream meltblown layer 54 is preferably formed fibers having a diameter greater than the diameter of the fibers forming the second, downstream meltblown layer 56. In an exemplary embodiment, the first layer 54 has a web basis weight of about 10 g/m$^2$, and is formed from fibers having a diameter of about 1 micrometer, and the second layer 56 has a web basis weight of about 2 g/m$^2$, and is formed from fibers having a diameter of about 0.65 micrometers. The use of fibers having a diameter of about 0.65 micrometers in the second layer 56 of the filtering component 14 is particularly advantageous in that the small fiber diameter significantly improves the filtration efficiency of the filter media. As a result, the filter media of the present invention provides performance levels similar to performance levels of current glass mat materials, but does not require the use of any glass fibers.

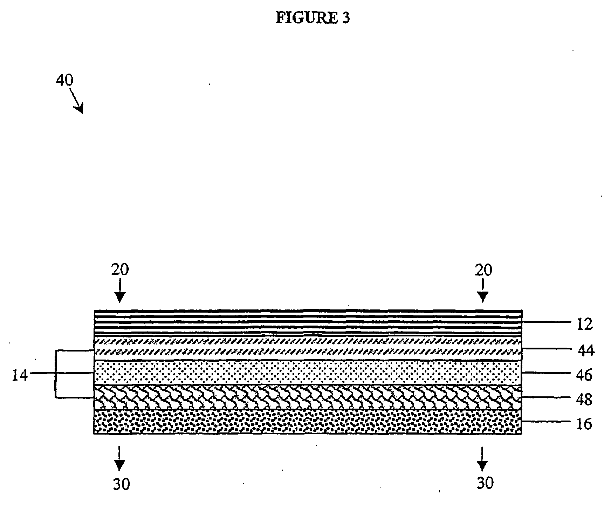

Figure 3 illustrates another embodiment of a filter media 40 for use in applications requiring an efficiency level of either 80-85% or 90-95%. The filter media 40 includes first and second outer layers 12, 16 as previously described, and a filtering component 14 formed from three meltblown layers 44, 46, 48. The first meltblown filtering component 44, which is disposed immediately downstream from the first outer layer 12, is formed from a coarse, high loft meltblown polymer fiber web, and serves as a pre-filter, catching and retaining the largest particles from the air stream being filtered. The first layer 44 prevents the larger particles in the air stream from closing the smaller voids in the second and third filtering components 46, 48. The web basis weight of layer 44 is preferably in the range of about 40 to 120 g/m$^2$, and more preferably is about 100 g/m$^2$. The second filtering component 46 is a meltblown web formed from fibers having a diameter of about 1 micrometers, and is effective to retain smaller particles not trapped by the first layer 44, thereby increasing the dust holding capacity of the filter media 40. The web basis weight of layer 46 is preferably in the range of about 3 to 25 g/m$^2$, and more preferably is about 10 g/m$^2$. The third filtering component 48 is a meltblown web formed from very fine fibers having a diameter of about 0.65 micrometers. The web basis weight of layer 48 is preferably in the range of about 1 to 10 g/m$^2$, and more preferably is about 2 g/m$^2$.

A person having ordinary skill in the art will appreciate that additional layers of each material used to form the filter media according to the present invention can be included, and additional materials can also be used as a substitute or in addition to the materials disclosed herein. Moreover, the filter media can optionally include various additives conventionally used in such materials to impart special properties, facilitate extrusion or otherwise improve performance of the material.

One suitable additive useful in the filter media according to the present invention is a charge stabilizing additive. Examples of charge stabilizing additives include fatty acid amides derived from fatty acids. The term "fatty acid" is recognized by those having ordinary skill in the art and it is intended to include those saturated or unsaturated straight chain carboxylic acids obtained from the hydrolysis of fats. Examples of suitable fatty acids include lauric acid (dodecanoic acid), myristic acid (tetradecanoic acid), palmitic acid (hexadecanoic acid), stearic acid (octadecanoic acid), oleic acid ((Z)-9-octadecenoic acid), linoleic acid ((Z,Z)-9,12-octadecadienoic acid), linolenic acid ((Z,Z,Z)-9,12,15-octadecatrienoic acid) and eleostearic acid (Z,E,E)-9,11,13-octadecatrienoic acid). Typically the amides formed from the above referenced acids are primary amides which are prepared by methods well known in the art. Secondary and tertiary fatty acid amides can also be suitable as charge stabilizing agents wherein the amide nitrogen is substituted with one or more alkyl groups. Secondary and tertiary fatty acid amides can also be prepared by methods well known in the art, such as by esterification of a fatty acid followed by an amidation reaction with a suitable alkylamine. The alkyl substituents on the amide nitrogen can be straight chain or branched chain alkyl groups and can have between about two and twenty carbon atoms, inclusive, preferably between about two and 14 carbon atoms, inclusive, more preferably between about two and six carbon atoms, inclusive, most preferably about two carbon atoms. In a preferred embodiment, the fatty acid amide can be a "bis" amide wherein an alkyl chain tethers two nitrogens of two independent amide molecules. For example, alkylene bis-fatty acid amides include alkylene bis-stearamides, alkylene bis-palmitamides, alkylene bis-myristamides and alkylene bis-lauramides. Typically the alkyl chain tether includes between about 2 and 8 carbon atoms, inclusive, preferably 2 carbon atoms. The alkyl chain tether can be branched or unbranched. Preferred bis fatty acid amides include ethylene bis-stearamides and ethylene bis-palmitamides such as N,N'-ethylenebisstearamide and N, N'-ethylenebispalmitamide.

To prepare filter media 10, 40, 50 according to the present invention, meltblown and spunbond processes known in the art can be used.

By way of non-limiting example, the meltblown process used to form the first outer layer 12 and the filtering component 14 involves extruding a molten thermoplastic polymer through a plurality of fine, usually circular, die capillaries as molten threads or filaments into a high velocity gas stream which attenuates the filaments of molten thermoplastic polymer to reduce their diameter. The flow rate and pressure of the attenuating gas stream can be adjusted to form continuous melt blown filaments or discontinuous fibers. The formed air-borne fibers, which are not fully quenched, are carried by the high velocity gas stream and deposited on a collecting surface to form a web of randomly dispersed and autogenously bonded melt blown fibers. In an exemplary embodiment, the first outer layer 12 can be texturized by blowing the fibers onto a collecting surface having a pattern formed thereon.

The nature of webs formed by the meltblown process may be varied by adjustment of the processing parameters, such as the blowing air temperature, velocity, and direction. These parameters affect individual fiber length, diameter, and physical properties. Other important factors are orifice geometry and the distance between the die assembly and the collection surface.

Exemplary processes for producing meltblown fiber webs are disclosed in U.S. Patent Nos. 3,849,241 to Butin et al., and 4,380,570 to Schwarz.

The spunbond polymer web used to form the second outer layer 16 can be formed by extruding one or more molten thermoplastic polymers as fibers from a plurality of capillaries of a spinneret. The extruded fibers are cooled while being drawn by an eductive or other well-known drawing mechanism to form spunbond fibers. The drawn spunbond fibers are then deposited or laid onto a forming surface in a random manner to form a loosely entangled and uniform fiber web. The laid fiber web is then subjected to a bonding process, such as thermobonding or by needlepunching, to impart physical integrity and dimensional stability to the resulting nonwoven fiber web.

Exemplary processes for producing spunbond nonwoven webs are disclosed, for example, in U.S. Patent Nos. 4,340,563 to Appel et al., 3,802,817 to Matsuki et al., 3,855,046 to Hansen et al., and 3,692,618 to Dorschener et al.

Once the spunbond and meltblown layers are formed, the layers are bonded to form the filter media 10, 40, 50 according to the present invention. Several processes known in the art can be used to form the filter media 10, 40, 50, such as ultrasonic welding, ultrasonic bonding, adhesives or other methods known to those having ordinary skill in the art. Ultrasonic bonding can be accomplished by edge welding, full width bonding, partial Width bonding, or combinations thereof.

Alternatively, the layers can be pressed together by a calendering process which causes each layer to physically adhere to the other layer. This provides the advantage that a bonding agent is not incorporated into the filter media 10, 40, 50 and thus does not effect the porosity of the filter media 10, 40, 50.

Following or during formation of the filter media 10, 40, 50, the fiber web can optionally be imparted with an electrostatic charge for enhancing performance of the filter media 10, 40, 50. A variety of techniques are well known to impart a permanent dipole to the polymer web in order to form electret filter media. Charging can be effected through the use of AC or DC corona discharge units and combinations thereof. The corona unit(s), AC corona discharge unit(s) and/or DC corona discharge unit(s) can be placed above and/or below a fiber web to impart electret properties to the fiber web. Configurations include placement of a neutrally grounded roll(s) on either side of the fiber web and the active electrode(s) above or below either side of the web. In certain embodiments, only one type of corona discharge unit, e.g., a DC or an AC corona discharge unit, is placed above, below or in an alternating arrangement above and below the fiber web. In other embodiments alternating AC or DC corona discharge units can be used in combination. The AC or DC corona discharge unit can be controlled so that only positive or negative ions are generated. The particular characteristics of the discharge are determined by the shape of the electrodes, the polarity, the size of the gap, and the gas or gas mixture.

An example of a process for producing electret properties in fiber webs can be found in U.S. Patent No. 5,401,446. Charging can also be accomplished using other techniques, including friction-based charging techniques. Typically the fiber web is subjected to a discharge of between about 1 to about 30 kV(energy type, e.g., DC discharge or AC discharge)/cm, preferably between about 10 kV/cm and about 30 kV/cm, with a preferred range of between about 10 to about 20 kV/cm.

A person having ordinary skill in the art will readily appreciate that filter efficiency and properties of the electret filter media of the invention can also be optimized through additional processing techniques.

In use, filter performance is evaluated based on different criteria. It is desirable that filters, or filter media, be characterized by low penetration across the filter of contaminants to be filtered. At the same time, however, there should exist a relatively low pressure drop, or resistance, across the filter. Penetration, often expressed as a percentage, is defined as follows:

$$\text{Pen} = C/C_o$$

where C is the particle concentration after passage through the filter and $C_o$ is the particle concentration before passage through the filter. Filter efficiency is defined as

$$100 - \% \text{ Penetration}$$

Because it is desirable for effective filters to maintain values as low as possible for both penetration and pressure drop across the filter, filters are rated according to a value termed alpha ($\alpha$), which is the slope of log penetration versus pressure drop across the filter. Steeper slopes, or higher alpha values, are indicative of better filter performance. Alpha is expressed according to the following formula

$$\alpha = -100 \log (C/C_o)/DP$$

where DP is the pressure drop across the filter. This is typically a few mm of $H_2O$.

Standard tests for evaluating filter performance are known in the art and focus on penetration and resistance (as related by alpha value) after 200 milligrams of loading. In one common test, the filter material is soaked in isopropyl alcohol until it is completely wet, and then is left to dry for at least twenty-four hours. The soaking is effective to eliminate any charge on the filter material. The product is then tested to determine the worst possible pressure drop and filtration efficiency for filter performance during the life of the filter.

Filter materials can be tested using a TSI® Model 8110 Automated Filter Tester (manufactured by TSI, Inc., St. Paul, MN) using 0.5 micron NaCl particles. Filter materials can also be tested on a TSI® Model 8130 Automated Filter Tester using 0.3 micron dioctyl phthalate (DOP) particles. Particle concentrations are measured upstream and downstream of the filter by the instrument's laser photometer. The test runs automatically, with percent penetration, flow rate, and pressure drop printed out at the conclusion of each test. The measured filtration efficiency and pressure drop can be used to determine the alpha value of the filter material, which can be compared to alpha values of the filter material prior to soaking.

The filter media of the present invention provide efficiencies of filtration for air borne contaminants of 40-45%, 60-65%, 80-85% and 90-95%, with a dust holding capacity of about 8.0 $g/m^2$. This is a significant improvement over current synthetic filter materials which have similar efficiencies, but which have dust holding capacities between about 4.0 and 7.0 $g/m^2$.

The filter media according to the present invention may be utilized in a wide variety of air filter applications, and are particularly suitable for use in ASHRAE filters. Thus, for example, the filter media may be used to form HVAC, HEPA, ULPA or similar filters. In some instances, media according to the present invention may be utilized to enhance the operation of other media, such as other types of commercially available filter media. Thus, media according to the present invention may be applied to the upstream side, downstream side, or between layers of various filter media to achieve preferred filter operation.

The following examples serve to further described the invention.

### Example 1

The resulting four layer electret filter media was prepared as described above, wherein the first outer layer (dust entering side) was formed from a 100 $g/m^2$ coarse fiber, stiff polypropylene meltblown having fibers with a diameter of approximately 5 to 7 micrometers. The filtering component was formed from two layers, the first (upstream) layer being a 10 $g/m^2$ coarse fiber, high loft polypropylene meltblown having fibers with a diameter of about 1 micrometer, and the second (downstream) layer being a 2 $g/m^2$ fine fiber polypropylene meltblown having fibers with a diameter of about 0.65 micrometers. The second outer layer (gas exit side) was formed from a 34 $g/m^2$ coarse polypropylene spunbond layer.

### Comparative Example 1

A first comparative example was prepared from four layers of fiber web. The first outer layer (gas entry side) was formed from an 8.5 $g/m^2$ light polypropylene spunbond. The filtering component was formed from two layers of fiber web, the first (upstream) layer being a 80 $g/m^2$ coarse fiber, high loft polypropylene meltblown, and the second (downstream) layer being a 20 $g/m^2$ fine fiber polypropylene meltblown. The second outer layer (gas exit side) was formed from a 42 $g/m^2$ moderate weight polypropylene Typar product sold by Reemay, which is a subsidiary of BBA.

*Comparative Example 2*

A second comparative example was prepared from two glass fiber layers. The first layer was formed from a light polyester spunbond backing having a web basis weight of approximately 15 g/m$^2$. The second layer was formed from a glass high loft fiber layer having a web basis weight of approximately 55-60 g/m$^2$.

The following table illustrates the properties of one embodiment of the filter media according to the present invention, as prepared according to Example 1, compared to current filter media prepared according to Comparative Examples 1 and 2. Table 1 demonstrates that increased alpha values are achieved by using a filter media prepared according to the present invention, and in particular, a filter media having a meltblown layer formed from fibers having a diameter of about 0.65 micrometers. The performance of the filter media prepared according to Example 1 is similar to the performance of the existing glass mat material prepared according to Comparative Example 2, and offers advantages over the prior art synthetic filter media prepared according to Comparative Example 1.

TABLE 1

|  | EXAMPLE 1 | COMPARATIVE EXAMPLE 1 | COMPARATIVE EXAMPLE 2 |
|---|---|---|---|
| **Basis Weight** | 150 g/m$^2$ | 150 g/m$^2$ | 70 g/m$^2$ |
| **Thickness** | 75 mils | 65 mils | 65 mils |
| **Air Flow Resistance at 90% efficiency** | 3.1 mmH$_2$O | 4.7 mmH$_2$O | 2.2 mmH$_2$O |
| **NaCl Penetration (% after IPA Soak)** | 31.2% | 28% | 40% |
| DOP Penetration **(% after IPA Soak)** | 47.8% | 45.0% | 60% |
| **NaCl Penetration (mm H$_2$O$^{-1}$)** | 16.3 mm H$_2$O$^{-1}$ | 11.8 mm H$_2$O$^{-1}$ | 18.0 mm H$_2$O$^{-1}$ |
| **DOP Alpha (mm H$_2$O$^{-1}$)** | 10.3 mm H$_2$O$^{-1}$ | 7.4mm H$_2$O$^{-1}$ | 10.1 mm H$_2$O$^{-1}$ |
| **Dust Holding Capacity** | 7.0 g/m$^2$ | 5.0 g/m$^2$ | 8.5 g/m$^2$ |

Those having ordinary skill in the art will know, or be able to ascertain, using no more than routine experimentation, many equivalents to the specific embodiments of the invention described herein. These and all other equivalents are intended to be encompassed by the following claims.

**Claims**

1. A filter media formed from a multicomponent sheet, the filter media comprising:

    a coarse meltblown upstream outer layer;
    a spunbond downstream outer layer;
    a filtering component disposed between the upstream outer layer and the downstream outer layer, the filtering component including a first, upstream meltblown layer and a second, downstream meltblown layer, the first and second meltblown layers being formed from fibers having a diameter in the range of about 0.5 to 1.5 micrometers, and the fibers forming the first meltblown layer having a diameter greater than a diameter of the fibers forming the second meltblown layer.

2. The filter media of claim 1, wherein the second meltblown layer is formed from fibers having a diameter of about 0.65 micrometers, and the first meltblown layer is formed from fibers having a diameter of about 1 micrometer.

3. The filter media of claim 1, wherein the first and second meltblown layers each have a web basis weight in the range of about 1 to 20 g/m$^2$.

4. The filter media of claim 1, wherein the first meltblown layer has a web basis weight of about 10 g/m$^2$.

5. The filter media of claim 1, wherein the second meltblown layer has a web basis weight of about 2 g/m$^2$.

**6.** The filter media of claim 1, wherein the upstream outer layer is formed from fibers having a diameter in the range of about 5 to 10 micrometers.

**7.** The filter media of claim 1, wherein the upstream outer layer has a web basis weight of about 100 g/m$^2$.

**8.** The filter media of claim 1, wherein the spunbond downstream outer layer is formed from fibers having a diameter in the range of about 10 to 25 micrometers.

**9.** The filter media of claim 1, wherein the spunbond downstream outer layer has a web basis weight in the range of about 10 to 40 g/m$^2$.

**10.** The filter media of claim 1, wherein the filter media has an alpha value of at least about 10.

**11.** The filter media of claim 1, wherein the filter media has an alpha value of about 16.

**12.** The filter media of claim 1, wherein the upstream outer layer, the downstream outer layer, and the middle filtering component are each formed from polymers selected from the group consisting of polyolefins, acrylic polymers and copolymers, vinyl halide polymers and copolymers, polyvinyl ethers, polyvinylidene halides, polyacrylonitrile, polyvinyl ketones, polyvinyl amines, polyvinyl aromatics, polyvinyl esters, copolymers of vinyl monomers, natural and synthetic rubbers, polyamides, polyesters, polycarbonates, polyimides, polyethers, fluoropolymers, and mixtures thereof.

**13.** The filter media of claim 1, wherein the filtering component, the upstream outer layer, and the downstream outer layer are formed from polypropylene.

**14.** The filter media of claim 1, wherein the filter media has a dust holding capacity of at least about 50 g/m$^2$.


**Patentansprüche**

**1.** Aus einer Mehrkomponenten-Fläche geformtes Filtermedium, wobei das Filtermedium Folgendes aufweist:

eine grobe schmelzgeblasene stromaufwärts liegende äußere Schicht;
eine schmelzgesponnene stromabwärts liegende äußere Schicht;
eine zwischen der stromaufwärts liegenden äußeren Schicht und der stromabwärts liegenden äußeren Schicht angeordnete filtrierende Komponente, wobei die filtrierende Komponente eine erste, stromaufwärts liegende schmelzgeblasene Schicht und eine zweite, stromabwärts liegende schmelzgeblasene Schicht enthält, wobei die erste und die zweite schmelzgeblasene Schicht aus Fasern mit einem Durchmesser im Bereich von etwa 0.5 bis 1.5 Mikrometern geformt sind, und die Fasern, welche die erste schmelzgeblasene Schicht formen, einen Durchmesser haben, welcher größer ist als ein Durchmesser jener Fasern, welche die zweite schmelzgeblasene Schicht formen.

**2.** Filtermedium nach Anspruch 1, wobei die zweite schmelzgeblasene Schicht aus Fasern mit einem Durchmesser von etwa 0.65 Mikrometern geformt ist, und die erste schmelzgeblasene Schicht aus Fasern mit einem Durchmesser von etwa 1 Mikrometer geformt ist.

**3.** Filtermedium nach Anspruch 1, wobei die erste und die zweite schmelzgeblasene Schicht jeweils ein Vliesbasisgewicht im Bereich von etwa 1 bis 20 g/m$^2$ haben.

**4.** Filtermedium nach Anspruch 1, wobei die erste schmelzgeblasene Schicht ein Vliesbasisgewicht von etwa 10 g/m$^2$ hat.

**5.** Filtermedium nach Anspruch 1, wobei die zweite schmelzgeblasene Schicht ein Vliesbasisgewicht von etwa 2 g/m$^2$ hat.

**6.** Filtermedium nach Anspruch 1, wobei die stromaufwärts liegende äußere Schicht aus Fasern geformt ist, welche einen Durchmesser im Bereich von etwa 5 bis 10 Mikrometern haben.

**7.** Filtermedium nach Anspruch 1, wobei die stromaufwärts liegende äußere Schicht ein Vliesbasisgewicht von etwa 100 g/m² hat.

**8.** Filtermedium nach Anspruch 1, wobei die schmelzgesponnene stromabwärts liegende äußere Schicht aus Fasern mit einem Durchmesser im Bereich von etwa 10 bis 25 Mikrometern geformt ist.

**9.** Filtermedium nach Anspruch 1, wobei die schmelzgesponnene stromabwärts liegende äußere Schicht ein Vliesbasisgewicht im Bereich von etwa 10 bis 40 g/m² hat.

**10.** Filtermedium nach Anspruch 1, wobei das Filtermedium einen Alphawert von mindestes etwa 10 hat.

**11.** Filtermedium nach Anspruch 1, wobei das Filtermedium einen Alphawert von etwa 16 hat.

**12.** Filtermedium nach Anspruch 1, wobei die stromaufwärts liegende äußere Schicht, die stromabwärts liegende äußere Schicht, und die mittlere filtrierende Komponente jeweils aus Polymeren geformt sind, welche aus der Gruppe gewählt sind, die besteht aus Polyolefinen, Acrylpolymeren und -copolymeren, Vinylhalogenidpolymeren und -copolymeren, Polyvinylethem, Polyvinyliden Halogeniden, Polyacrylonitril, Polyvinylketonen, Polyvinylaminen, Polyvinylaromaten, Poylvinylestern, Copolymeren von Vinylmonomeren, Natur- und Synthetikgummi, Polyamiden, Polyestern, Polycarbonaten, Polyimiden, Polyethern, Fluoropolymeren, und Mischungen aus denselben.

**13.** Filtermedium nach Anspruch 1, wobei die filtrierende Komponente, die stromaufwärts liegende äußere Schicht, und die stromabwärts liegende äußere Schicht aus Polypropylen geformt sind.

**14.** Filtermedium nach Anspruch 1, wobei das Filtermedium ein Staubrückhaltevermögen von wenigstens etwa 50 g/m² hat.

## Revendications

**1.** Un support filtrant formé d'une feuille à plusieurs composants, le support filtrant comprenant :

une couche extérieure non tissée par fusion soufflage en aval ;
une couche extérieure non tissée par filage en amont ;
un composant filtrant disposé entre la couche extérieure en amont et la couche extérieure en aval, le composant filtrant comprenant une première couche non tissée par fusion soufflage en amont et une seconde couche non tissée par fusion soufflage en aval, la première et la seconde couches non tissées par fusion soufflage étant formées de fibres ayant un diamètre de l'ordre d'environ 0,5 à 1,5 micromètres, et les fibres formant la première couche non tissée par fusion soufflage ayant un diamètre plus grand qu'un diamètre des fibres constituant la seconde couche non tissée par fusion soufflage.

**2.** Le support filtrant de la revendication 1, dans lequel la seconde couche non tissée par fusion soufflage est formée à partir de fibres ayant un diamètre d'environ 0,65 micromètres et la première couche non tissée par fusion soufflage est formée à partir de fibres ayant un diamètre d'environ 1 micromètre.

**3.** Le support filtrant de la revendication 1, dans lequel la première et la deuxième couches non tissées par fusion soufflage ont chacune une masse surfacique de toile de l'ordre d'environ 1 à 20 g/m².

**4.** Le support filtrant de la revendication 1, dans lequel la première couche non tissée par fusion soufflage a une masse surfacique d'environ 10 g/m².

**5.** Le support filtrant de la revendication 1, dans lequel la deuxième couche non tissée par fusion soufflage a une masse surfacique de toile d'environ 2 g/m².

**6.** Le support filtrant de la revendication 1, dans lequel la couche extérieure en amont est formée à partir de fibres ayant un diamètre de l'ordre d'environ 5 à 10 micromètres.

**7.** Le support filtrant de la revendication 1, dans lequel la couche extérieure en amont a une masse surfacique d'environ 100 g/m².

**8.** Le support filtrant de la revendication 1, dans lequel la couche extérieure non-tissée par filage en aval est formée à partir de fibres ayant un diamètre de l'ordre d'environ 10 à 25 micromètres.

**9.** Le support filtrant de la revendication 1, dans lequel la couche extérieure non-tissée par filage en aval a une masse surfacique de toile de l'ordre d'environ 10 à 40 g/m$^2$.

**10.** Le support filtrant de la revendication 1, dans lequel le support filtrant a une valeur alpha d'au moins environ 10.

**11.** Le support filtrant de la revendication 1, dans lequel le support filtrant a une valeur alpha d'environ 15.

**12.** Le support filtrant de la revendication 1, dans lequel la couche extérieure en amont, la couche extérieure en aval et le composant filtrant du milieu sont chacun formé de polymères sélectionnés à partir du groupe composé de polyolefines, de polymères d'acrylique et de copolymères, de polymères vinyle haloïde et de copolymères, d'esters de polyvinyle, d'halides de polyvinylidène, de polyacrylonitrile, de cétones de polyvinyle, d'aminés de polyvinyle, d'aromatiques de polyvinyle, d'esters de polivinyle, de copolymères de monomères de vinyle, de caoutchoucs naturel et synthétique, de polyamides, de polyesters, de polycarbonates, de polyimides, de polyethers, de fluoropolymères et de mélanges de ceux-ci.

**13.** Le support filtrant de la revendication 1, dans lequel le composant filtrant, la couche extérieure en amont et la couche extérieure en aval sont formées à partir de polypropylène.

**14.** Le support filtrant de la revendication 1, dans lequel le support filtrant a une capacité à retenir la poussière d'au moins environ 50 g/m$^2$.

FIGURE 1

**FIGURE 2**

FIGURE 3